# EUROPEAN PATENT SPECIFICATION

(11) **EP 1 455 623 B1**
(45) Date of publication and mention of the grant of the patent: **12.09.2007**
(21) Application number: 02793479.3
(22) Date of filing: 17.12.2002
(51) Int. Cl.: A47J 37/08, F24C 11/00, F24C 7/02

(54) **MICROWAVE OVEN WITH TOASTER**
MIKROWELLENHERD MIT TOASTER
FOUR A MICRO-ONDES AVEC GRILLE-PAIN

(30) Priority: 19.12.2001 KR 2001081460
(43) Date of publication of application: 15.09.2004
(73) Proprietor: LG ELECTRONICS INC., Seoul 150-721 (KR)
(72) Inventor: KIM, Hyung Do, Kyongsangnam-do 641-010 (KR)
(74) Representative: Garkisch, Marcus
(86) International application number: PCT/KR2002/002373
(87) International publication number: WO 2003/051164

(56) References cited:
- EP-A2- 1 213 948
- JP-A- 2 004 131
- JP-A- 3 271 630
- JP-A- 4 055 622

## Description

### TECHNICAL FIELD

The present invention relates to a microwave oven with a bread toaster, and more particularly, to a structure of a microwave oven with a bread toaster, in which each slice of bread enters into or exits from inside of the bread toaster.

### BACKGROUND ART

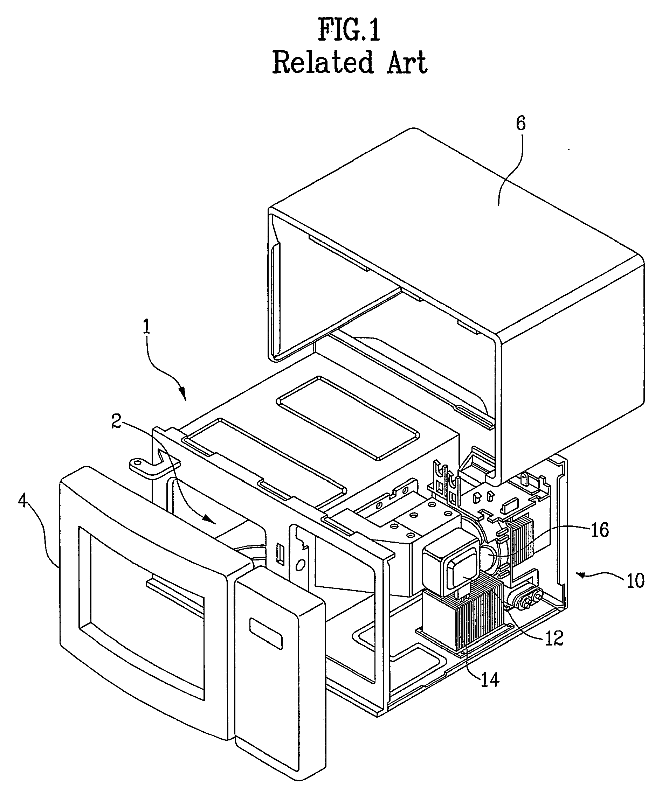

In general, an ordinary microwave oven, which is illustrated in FIG. 1, is an apparatus that applies microwave-heat to an object. Referring to FIG. 1, the microwave oven includes a cavity 2, in which an object is microwave-heated, and the cavity 2 is provided inside a cavity assembly 1. The cavity 2 is opened and closed by a cavity door 4. An electrical device chamber 10 that includes various electrical devices for generating microwave heat is provided next to the cavity 2 and is covered with an outer case 6. Some of the electrical devices are a magnetron 12 generating microwaves, a high-voltage transformer 14 supplying high voltage to the magnetron 12, and a ventilating fan 16 cooling down the heated electrical devices by generating an air flow inside of the cavity 2.

Since the ordinary microwave oven shown in FIG. 1 heats the object by using the microwaves, it may not be proper to use it for toasting slices of bread. Therefore, there have been high demands for microwave ovens that are able to cook or heat food by using the microwaves and also to toast the slices of bread as well. In a microwave oven having the toasting performance, it is important to maximize the toasting performance of the bread toaster. Also, user's security and convenience have to be obtained so as to improve the quality of the bread toaster.

EP-A 1 213 948 discloses a microwave oven with a bread toaster where an electrical device chamber and a ventilating device are provided behind the toaster. This document is prior art in accordance with Art. 54(3) and (4) EPC.

### DISCLOSURE OF THE INVENTION

Accordingly, the present invention is directed to a microwave oven with a bread toaster that substantially obviates one or more problems due to limitations and disadvantages of the related art.

An object of the present invention is to provide a microwave oven with a bread toaster, in which each slice of bread is easily drawn out from inside of the bread toaster after toasting.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly describe herein, a microwave oven with a bread toaster includes the features of claim 1.

Preferably, said ventilating device includes a grill having a plurality of suction holes on a front surface of said microwave oven, and a fan assembly provided to be connected with the outside at a backside of said microwave oven, for having a fan ventilating an air inside said cavity and a motor driving said fan.

Preferably, said electrical device chamber is connected with said ventilating device.

Preferably, said toaster includes a toaster door closing or opening said toaster entrance in a line with a cavity door, and a tray connected to said toaster door by link mechanism, for being moved outward or inward according to the opening or closing of said toaster door.

Preferably, said toaster door rotates about an axis provided at the bottom of said toaster door, said bread slice is vertically placed on said tray, and said tray further includes a flange provided at the rear of said tray for supporting the backside of the bread slice.

Preferably, said link mechanism includes a tray support having said tray at an upper part therein, reciprocating within a toaster body, and a connecting lever connecting said door to said tray support.

Preferably, in said link mechanism, said tray support moves along slots provided at both sidewalls of said toaster body, and said slots are extended at the bottom of the both sidewalls of said toaster body in parallel with said sidewalls.

Preferably, said tray support includes a bushing fastened to the both sides therein and guiding a reciprocating movement in a state of being inserted to said slot.

Preferably, said connecting lever includes a first end being hingedly connected with said bushing, and a second end being hingedly connected with said toaster door.

Preferably, said link mechanism includes an elastic member for connecting said connecting lever to said toaster body so as to support said toaster door to be closed.

Preferably, said elastic member connects one end of said connecting lever that is connected to said toaster tray, with a rear end of the toaster body.

Accordingly, it is possible to provide the toaster within the microwave oven without increasing a size of the microwave oven, and to easily draw out the bread slice from the toaster case, thereby improving the user's convenience and reliability of the product.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 illustrates an exploded perspective view of an ordinary microwave oven;
FIG. 2 illustrates a perspective view of a microwave oven with a bread toaster according to the present invention;
FIG. 3 illustrates an exploded perspective view of a bread toaster included in the microwave oven shown in FIG. 2;
FIG. 4 illustrates a side view of a bread toaster when a bread slice is inside the bread toaster; and
FIG. 5 illustrates a side view of a bread toaster when a bread slice is out of the bread toaster.

### BEST MODE FOR CARRYING OUT THE INVENTION

Reference will now be made in detail to the preferred embodiments of the present invention, examples of which are illustrated in the accompanying drawings. Wherever possible, the same reference numbers will be used throughout the drawings to refer to the same or like parts.

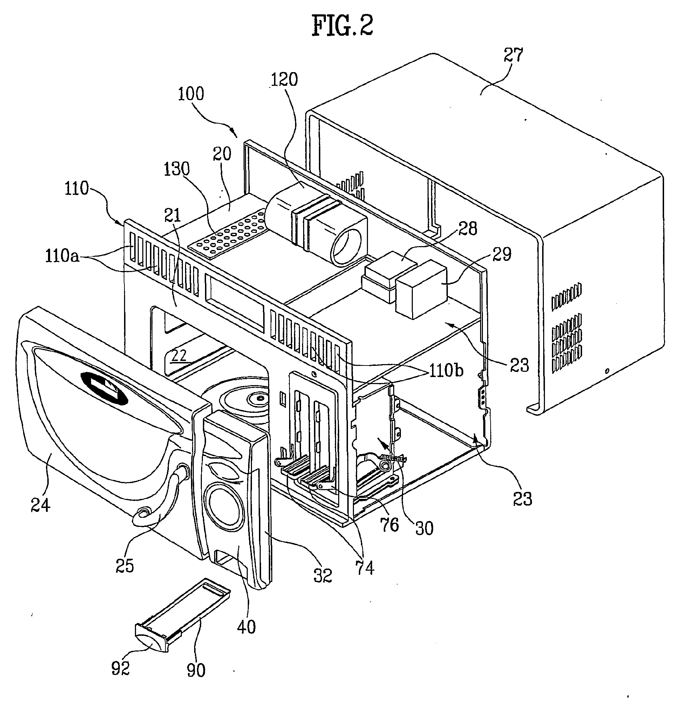

FIG. 2 illustrates an exploded perspective view of a microwave oven with a toaster according to the present invention. Referring to FIG. 2, a cavity 22 is provided within a cavity assembly 20, and an object (food) can be heated in the cavity 22 by microwaves. Various electrical devices for generating the microwaves are provided inside an electrical device chamber 23, and a toaster 30 and a ventilating device 100 is provided adjacent to the cavity 22. The microwave oven shown in FIG. 2 also includes a front plate 21.

The cavity 22 is selectively opened or closed by a cavity door 24. When the cavity door 24 is closed, it covers one side of the cavity 22 by being in contact with the front plate 21. The cavity door 24, includes a door handle 25 enabling a user to open and close the cavity door 24. The cavity assembly 20, the electrical device chamber 23, and the ventilating device 100 are covered with an outer case 27 that forms top and side exterior surfaces of the microwave oven.

The aforementioned microwave oven according to the present invention will be explained in detail.

The electrical device chamber 23 is provided in an upper part of the microwave oven, particularly, on the cavity 22. A bottom surface of the electrical device chamber 23 is positioned at the approximately same height with a top surface of the cavity 22, so that it is possible to obtain an enough space to arrange the toaster 30 adjacent to a side of the cavity 22. The electrical device chamber 23 includes a magnetron 28 for generating microwaves, and a high-voltage transformer 29 for supplying a high voltage to the magnetron 28.

The ventilating device 100 exhausts the cavity 22 of gases generated by heating or cooking the object (food). Also, the ventilating device 100 cools the magnetron 28 and the high-voltage transformer 29 with an air flow generated during exhausting the cavity 22 of gases. In this respect, the ventilating device 100 is connected to the electrical device chamber 23. Preferably, the ventilating device 100 is provided in the upper part of the microwave oven. As shown in drawings, the ventilating device 100 is substantially provided on the cavity 22, and is connected to the electrical device chamber 23.

The ventilating device 100 largely comprises a grill 110 and a fan assembly 120. The grill 110 is provided on a front surface of the microwave oven, and may be extended from the front plate 21. The grill 100 includes a plurality of first suction holes 110a for sucking an external air into the inside of the microwave oven. The ventilating device 100 also includes a plurality of supplementary suction holes 130 on a top surface of the cavity 22. That is, the cavity 22 is connected with the outside and the ventilating device 100 so as to exhaust the cavity of gases through the first suction holes 110a and the supplementary suction holes 130.

Meanwhile, the grill 110 may be extended to a front side of the electrical device chamber 23 being arranged in parallel with the ventilating device 100, and a plurality of second suction holes 110b may be provided on the extended portion of the grill 100. Accordingly, the electrical device chamber 23 is connected with the outside of the microwave oven as well as with the ventilating device 100, thereby cooling various electrical devices due to the air flow by the ventilating device 100. The fan assembly 120 is provided at a backside of the microwave oven, and is connected to the outside of the microwave oven by discharge holes (not shown). The fan assembly 120 includes a fan and a motor for driving the fan, so that the fan assembly 120 generates the air flow inside the microwave oven at a predetermined direction.

In the ventilating device 100 having the aforementioned structure, if the fan assembly 120 is driven, the external air is moved into the ventilating device 100 inside the microwave oven through the grill 110 by a suction force. The air passing through the first suction holes 110a is moved into the fan assembly 120, simultaneously, the air within the cavity 22 is moved into the ventilating device 110 through the supplementary suction holes 130. After that, the air flow from the first suction holes 110a is mixed with the air flow from the supplementary suction holes 130, and then the mixed air is discharged to the outside of the microwave oven through the fan assembly 120. The air inside the cavity 22 is smoothly discharged to the outside of the microwave oven by the air flow through the first suction holes 110a. Meanwhile, the air through second suction holes 110b moves in the electrical device chamber 23, and then is discharged to the outside of the microwave oven through the fan assembly 120 of the ventilating device 100. The air flow cools the magnetron 28 and the high-voltage transformer 29 of the electrical device chamber 23 .

The toaster 30 is provided in a vacant room under the electrical device chamber 23. That is, the toaster 30 is provided adjacent to the side of the cavity 22 for being in a line with the cavity 22, thereby obtaining a user's convenience. Also, the toaster 30 is provided for penetrating the front plate 21. A toaster panel 32 is provided at the front of the toaster 30, and an exterior surface of the toaster panel 32 is made of the same material as the cavity door 24. Accordingly, the toaster panel 32 forms a smooth front surface with the cavity door 24.

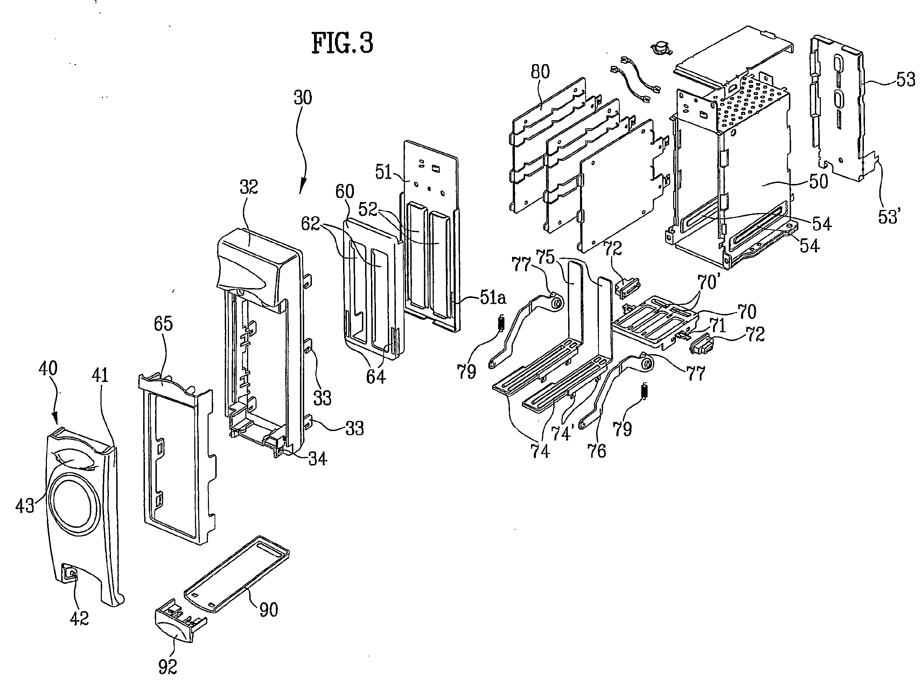

Reference to the toaster 30 according to the present invention will now be made in more detail. FIG. 3 illustrates an exploded perspective view of the toaster 30 included in the microwave oven shown in FIG. 2. As it can be seen from the figure, there are fastening hooks 33 at the back of the toaster panel 32 so that the panel 32 can be fastened to the front plate 21 of the microwave oven shown in FIG. 2.

The toaster 30 includes a toaster door 40 being hingedly attached to the toaster panel 32. For this hinge connection, the toaster panel 32 has hinge holes 34, and the toaster door 40 has hinge pins 42. The toaster door 40 is able to rotate about an axis formed by the hinge pins 42 for being opened and closed. That is, the toaster door 40 rotates about the axis provided at the bottom of the toaster door 40 by the hinge pins. The exterior surface material of the door panel 41 is also same as that of the toaster panel 32. Therefore, it forms a smooth front surface of the microwave oven, together with the cavity door 24 and the toaster panel 32. The hinge pins 42 are provided at the bottom of the door panel 41 for enabling the toaster door 40 to be rotationally opened and closed. The door panel 41 further includes a toaster door handle 43 so that a user can easily open and close the toaster door 40.

The Toaster 30 further includes a toaster case 50 that is provided at the back of the toaster panel 32. The toaster case 50 is combined with the toaster panel 32 through a part of the front plate 21 that corresponds to the front side of the electrical device chamber 23. The toaster case 50 is made of a metal material and provides a space for toasting each slice of bread.

A case front plate 51 is provided at the front of the toaster case 50. The case front plate 51 includes two case entrances 52, through which each bread slice enters into or exits from inside of the toaster case 50. On the other hand, a case rear plate 53 is provided at the back of the toaster case 50.

A toaster front 60 made of a metal material is provided on the case front plate 51 and is positioned within the toaster panel 32. The toaster front 60 becomes exposed when the toaster door 40 is opened, and it has two rectangular toaster entrances 62 as shown in FIG. 3. The toaster entrances 62 are connected to the case entrances 52 of the case front plate 51. In addition, a protector 65 is provided between the toaster front 60 and the toaster panel 32. It is made of an insulating material for blocking the heat that flows from the toaster front 60 to the toaster panel 32.

The toaster 30. includes at least one tray 74 positioned within the toaster case 50. The tray supports the bread slice when the bread slice is tasted. Even though the two trays 74 are shown in FIG. 3, a plurality of trays may be formed at need.

The toaster 30 further includes a heater 80, formed within the toaster case 50 for generating heat of toasting the bread slice. In the heater 80, heat-generating wires are wound. The heaters are positioned at portions that correspond to both sides of bread slice for providing heat to the bread slice.

Preferably, the toaster 30 shown in FIG. 3 further includes a crumb holder 90 that is provided at the bottom of the toaster case 50 through the lower part of the toaster panel 32. At the front of the crumb holder 90, a holder handle 92 is provided between the hinge pins 42. The user pulls the holder handle 92 to draw out the crumb holder 90, empties the holder 90, and pushes the holder handle 92 back in order to place the holder 90 inside of the toaster case 50. The surface material of the holder handle 92 is also same as that of the door panel 41.

The aforementioned microwave oven with the bread toaster has the following problems. When the toasting performance is completed, an inner temperature of the toaster 30 is high, so that it is difficult to draw out the toasted bread slice from the toaster. Especially, if the user draws out the bread slice from the toaster with hands, it is very complicated and dangerous due to the narrow toaster entrance and the high temperature inside the toaster.

Preferably, the tray 74 enters into or exits from the inside of the toaster 30 so as to easily draw out the bread slice. For user's convenience, it is preferable that the tray 74 is moved with an operation of the door 40. In this respect, the microwave oven with the bread toaster according to the present invention includes link mechanism for connectively operating the door 40 with the tray 74. In more detail, the link mechanism includes a connecting lever 76 for connecting the toaster door 40 to the tray support 70 reciprocating within the toaster case 50 that is a toaster body.

On the flat area of the tray support 70, a plurality of fastening slits 70' are provided, and a plurality of fastening hooks 74' are formed at the bottom of the tray 74. Then, the fastening slits 70' fit to the fastening hooks 74' so that the tray 74 is safely fasten to the tray support 70 for being moved with the tray support 70. Also, the tray has a support flange 75 provided at a rear end of the movable tray for supporting a backside of the bread slice when the tray 72 moves outward, so that the bread slice is stably positioned on the tray 74 without being fallen down by inertia.

Also, the tray support 70 moves along the moving slots 54 provided on both sides of the toaster case 50. The moving slots 54 are formed at the bottom of the toaster case 50 in parallel to the bottom edges of the left and right sides of the toaster case 50 for a stable reciprocating movement of the tray support 70. For being connectively operated with the moving slots 54, two connecting parts 71 are provided on left and right sides of the tray support 70, respectively, and a bushing 72 is provided at the end of each connecting part 71 and inserted to the moving slot 54. Each bushing 72 supports the tray support 70 and moves along the moving slot 54 provided on each side of the toaster case 50. The shape of each bushing 72 that is actually fitted to the moving slot 54 is formed in a manner of that the bushing 72 and the tray support 70 never rotate when moving along the moving slot 54. Accordingly, it is preferable to form a slot-inserting portion of each bushing 72 as a hexahedron-shape for having a same width and length as that of the moving slot 54, so that the trays 74 can be always moved in parallel to the moving slots 54.

Also, the tray support 70 has a same width as a frontal width of the toaster case 50. That is, when the tray support 70 moves forward, the tray support 70 is locked to a lower portion of a case front plate 51. Accordingly, when the toaster door 40 is completely opened, the tray support 70 is not projected out from the case front plate 5, however, a predetermined portion of each tray 74 positioned on the case front plate 51 is projected out from each toaster entrance 52, 62.

A first end of the connecting lever 76 is hingedly connected to the bushing 72, and a second end of the connecting lever 76 is also hingedly connected to the toaster door 40. Then, lever slots 64,51a are formed at the bottom of the toaster front 60 and the case front plate 51. Therefore, the connecting lever 76 connects the bushing 72 to the door 40 through the lever slots 64, 51a, and moves within the lever slots 64, 51a for moving the tray support 70 according to rotation of the toaster door 40.

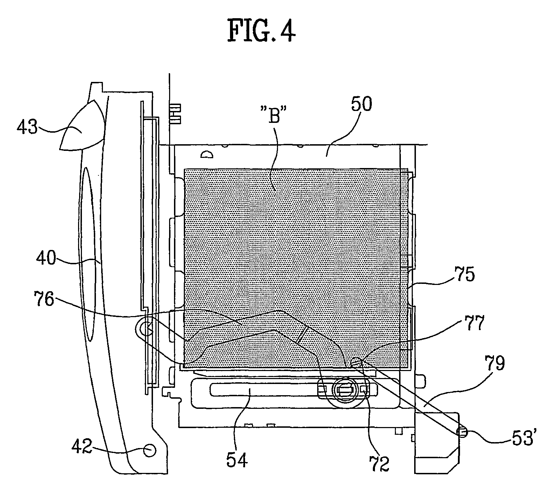

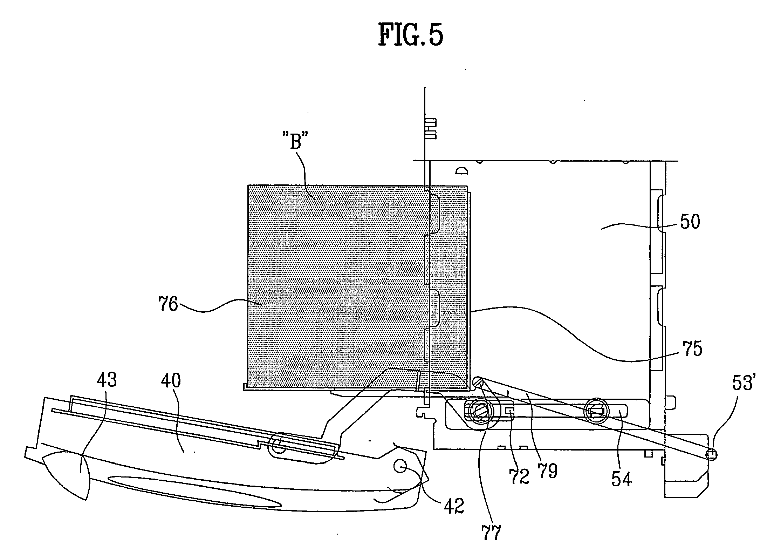

Preferably, the link mechanism further includes an elastic member 79 between the connecting lever 76 and the toaster case 50. The elastic member 79 connects an end connected to the tray support 70 of the connecting lever 76 to a rear end of the toaster body. As shown in FIG. 4 and FIG. 5, each end of the elastic member 79 is respectively connected to the first end of the connecting lever 76 connected to the bushing 72 and the rear end of the toaster case 50. In more detail, the first end of the elastic member 79 is combined with a spring hook 77 formed at the first end of the connecting lever 76, and the second end of the elastic member 79 is combined with a spring hook 53' formed at the rear of the case rear plate 53. Accordingly, when the toaster door 40 is opened, the elastic member 79 is extended between the spring hooks 77, 53'. Meanwhile, when the toaster door 40 is closed, the elastic member 79 exerts a force on the first end of the connecting lever 76 for closing the toaster door. That is, the elastic member 79 supports the door 40 for being closed.

Whenever the toaster door 40 is opened or closed by the aforementioned link mechanism, the tray 74 enters into or exits from the toaster case 50. That is, whenever the toaster entrances 62, 52 are opened or closed, the bread slice enters into or exits from the toaster case 50.

An operation of the aforementioned microwave oven with the bread toaster according to the present invention will be explained as follows.

As shown in FIG. 4, it is assumed that the entrances 52, 62 are initially closed by the toaster door 40 which is provided at the front of the toaster panel 32.

After completing toasting of the bread slice, if the user pulls the door handle 43, the toaster door 40 is opened. That is, the toaster door 40 rotates about an axis formed by the hinge pins 42 and hinge holes 34, and is opened as shown in FIG. 5. Simultaneously, the connecting lever 76 connected to the toaster door 40 is pulled by the toaster door 40 so that is projected out through the lever slots 51a, 64 with overcoming the elasticity of the elastic member 79.

As the connecting lever 76 moves, the bushing 72 connected to the first end of the connecting lever 76 moves along the slot 54, thereby moving the tray support 70 toward the front end of the toaster case 50. One portion of the tray 74, positioned at the tray support 70, is projected out from the entrance 62 at a predetermined distance. Therefore, the bread slice B positioned at the tray 74 exits from the toaster case 50 by the rotation of the toaster door 40. That is, the user can easily draw out the bread slice without being burned.

As shown in FIG. 4 and FIG. 5, the flange 75 supports the backside of the bread slice B. After completing toasting of the bread slice B, when the toaster door 40 is opened, the bread slice can be easily drawn out. For example, in a case where the bread slice is stuck at the case entrance 52 of the case front plate 51 since the bread slice B slightly leans in the tray 74, the rear flange 75 will pull out the bread slice from the inside of the toaster case 50 by pushing the backside of the bread slice.

In a case of toasting a bagel, a contacting area between the bagel and the tray 74 is small, so that the bagel may be out of the tray 74 by inertia. In this state, even though the toaster door 40 is opened, the bagel can exit from the toaster case since the flange 75 will push the bagel to pull it out. If the bagel is stuck inside of the toaster case 50, the flange 75 will also push the backside of the bagel to pull it out.

### INDUSTRIAL APPLICABILITY

In the microwave oven with the bread toaster according to the present invention, it is possible to toast the bread slice as well as to heat the object (food item), thereby obtaining the user's convenience.

Also, there is a vacant room for the toaster in the microwave oven according to the present invention since the electrical device chamber and the ventilating device are provided in the upper part of the microwave oven. That is, the toaster is provided within the microwave oven without increasing a size of the microwave oven. Furthermore, the toaster is provided next to the cavity in a line, thereby improving the user's convenience.

In the microwave oven with the bread toaster according to the present invention, the tray of the toaster enters into or exits from the inside of the toaster case if the toaster door is opened or closed. Also, the rear flange supporting the backside of the bread slice will pull out the bread slice from the inside of the toaster case after completing toasting performance. Accordingly, it is easy to draw out the bread slice from the toaster case, thereby improving the user's convenience and reliability of the product.

## Claims

1. A microwave oven with a bread toaster comprising:
a microwave cavity (22);
an electrical device chamber (23) having various electrical devices for heating an object within said microwave cavity (22), said electrical device chamber (23) being provided in an upper part of said microwave oven;
a ventilating device (100) for exhausting air inside said microwave cavity (22) to the outside of said microwave oven and cooling said electrical devices, said ventilating device (100) being provided in an upper part of said microwave oven;
a toaster (30) adjacent to said microwave cavity (22);
a toaster case (50) within said toaster (30);
a toaster front (60) including at least one first opening (62);
a toaster door (40) for selectively exposing or concealing said at least one first opening (62); and
at least one tray (74), wherein said at least one tray (74) is provided within said toaster case (50) when said at least one first opening (62) is concealed, and, a portion of said at least one tray (74) projects from said toaster case (50) through said at least one first opening (62) when said at least one first opening (62) is exposed.

2. The microwave oven with the bread toaster as claimed in claim 1, further comprising a link mechanism, wherein said at least one tray (74) and said toaster door (40) are coupled to each other via said link mechanism.

3. The microwave oven with the bread toaster as claimed in claim 2, wherein said link mechanism comprises:
a tray support (70) for supporting said at least one tray (74), and
a connecting lever (76), wherein said tray support (70) and said toaster door (40) are coupled to each other via said connecting lever (76).

4. The microwave oven with the bread toaster as claimed in claim 3, further comprising at least one moving slot (54) arranged within said toaster case (50), wherein said tray support (70) is movable along said at least one moving slot (54).

5. The microwave oven with the bread toaster as claimed in claim 4, wherein said at least one moving slot (54) is arranged within a bottom of said toaster case (50).

6. The microwave oven with the bread toaster as claimed in claim 4 or 5, wherein said at least one moving slot (54) is oriented parallel to said at least one tray (74).

7. The microwave oven with the bread toaster as claimed in claim 4, 5 or 6, further comprising a bushing (72) coupled to said tray support (70), said bushing (72) being movable within said at least one moving slot (54).

8. The microwave oven with the bread toaster as claimed in claim 7, wherein said connecting lever (76) includes a first end being hingedly connected with said bushing (72), and a second end being hingedly connected with said toaster door (40).

9. The microwave oven with the bread toaster as claimed in claim 8, further comprising an elastic member (79) being coupled to said connecting lever (76), the elastic member (79) exerting a force on the connecting lever (76) being apart from said toaster door (40).

10. The microwave oven with the bread toaster as claimed in claim 9, wherein said elastic member (79) is connected to a first end of said connecting lever (76).

11. The microwave oven with the bread toaster as claimed in any one of claims 1 to 10, wherein said toaster door (40) is rotatably connected to said toaster (30).

12. The microwave oven with the bread toaster as claimed in claim 11, wherein an axis for rotation of said toaster door (40) is provided at a bottom portion of said toaster door (40).

13. The microwave oven with the bread toaster as claimed in any one of claims 1 to 12, further comprising a flange (75) provided at the rear of said at least one tray (74).

14. The microwave oven with the bread toaster as claimed in any one of claims 1 to 13, wherein said ventilating device (100) comprises:
a grill (110) having a plurality of suction holes (110a,110b) on a front surface of said microwave oven, and
a fan assembly (120) provided to be connected with the outside at a backside of said microwave oven, and having a fan for ventilating air inside said cavity (22) and a motor for driving said fan.

## Patentansprüche

1. Mikrowellenofen mit einem Brottoaster, mit:
einem Mikrowellen-Garraum (22),
einer elektrischen Vorrichtungskammer (23) mit verschiedenen elektrischen Vorrichtungen zum Heizen eines Gegenstands in dem Mikrowellen-Garraum (22), wobei die elektrische Vorrichtungskammer (23) in einem oberen Teil des Mikrowellenofens vorgesehen ist,
einer Belüftungsvorrichtung (100) zum Ausstoßen von Luft in dem Mikrowellen-Garraum (22) von dem Mikrowellenofen nach außen und zum Kühlen der elektrischen Vorrichtungen, wobei die Belüftungsvorrichtung (100) in einem oberen Teil des Mikrowellenofens vorgesehen ist,
einem Toaster (30) angrenzend an den Mikrowellen-Garraum (22),
einem Toasterfach (50) in dem Toaster (30),
einer Toaster-Vorderseite (60) mit mindestens einer ersten Öffnung (62),
einer Toastertür (40) zum selektiven Freigeben oder Verdecken der mindestens einen ersten Öffnung (62), und
mindestens einer Ablage (74), wobei die mindestens eine Ablage (74) in dem Toasterfach (50) vorgesehen ist, wenn die mindestens eine erste Öffnung (62) verdeckt ist, und ein Teil der mindestens einen Ablage (74) aus dem Toasterfach (50) über die mindestens eine erste Öffnung (62) vorsteht, wenn die mindestens eine erste Öffnung (62) freigegeben ist.

2. Mikrowellenofen mit dem Brottoaster nach Anspruch 1, ferner mit einem Verbindungsmechanismus, wobei die mindestens eine Ablage (74) oder die Toastertür (40) über den Verbindungsmechanismus miteinander gekoppelt sind.

3. Mikrowellenofen mit dem Brottoaster nach Anspruch 2, wobei der Verbindungsmechanismus umfasst:
eine Ablagenhalterung (70) zum Haltern der mindestens einen Ablage (74), und
einen Verbindungshebel (76), wobei die Ablagenhalterung (70) und die Toastertür (40) über den Verbindungshebel (76) miteinander gekoppelt sind.

4. Mikrowellenofen mit dem Brottoaster nach Anspruch 3, ferner mit mindestens einem beweglichen Schlitz (54), der in dem Toasterfach (50) angeordnet ist, wobei die Ablagenhalterung (70) entlang dem mindestens einen beweglichen Schlitz (54) bewegbar ist.

5. Mikrowellenofen mit dem Brottoaster nach Anspruch 4, wobei der mindestens eine bewegliche Schlitz (54) in einem Boden des Toasterfachs (50) angeordnet ist.

6. Mikrowellenofen mit dem Brottoaster nach Anspruch 4 oder 5, wobei der mindestens eine bewegliche Schlitz (54) parallel zu der mindestens einen Ablage (74) ausgerichtet ist.

7. Mikrowellenofen mit dem Brottoaster nach Anspruch 4, 5 oder 6, ferner mit einer Hülse (72), die mit der Ablagenhalterung (70) gekoppelt ist, wobei die Hülse (72) in dem mindestens einen beweglichen Schlitz (54) bewegbar ist.

8. Mikrowellenofen mit dem Brottoaster nach Anspruch 7, wobei der Verbindungshebel (76) ein erstes Ende, das mit der Hülse (72) gelenkig verbunden ist, sowie ein zweites Ende, das mit der Toastertür (40) gelenkig verbunden ist, aufweist.

9. Mikrowellenofen mit dem Brottoaster nach Anspruch 8, ferner mit einem elastischen Element (79), das mit dem Verbindungshebel (76) gekoppelt ist, wobei das elastische Element (79) auf den Verbindungshebel (76), der von der Toastertür (40) beabstandet ist, eine Kraft ausübt.

10. Mikrowellenofen mit dem Brottoaster nach Anspruch 9, wobei das elastische Element (79) mit einem ersten Ende des Verbindungshebels (76) verbunden ist.

11. Mikrowellenofen mit dem Brottoaster nach einem der Ansprüche 1 bis 10, wobei die Toastertür (40) mit dem Toaster (30) drehbar verbunden ist.

12. Mikrowellenofen mit dem Brottoaster nach Anspruch 11, wobei eine Achse zur Drehung der Toastertür (40) an einem Bodenabschnitt der Toastertür (40) vorgesehen ist.

13. Mikrowellenofen mit dem Brottoaster nach einem der Ansprüche 1 bis 12, ferner mit einem Flansch (75), der an der Rückseite der mindestens einen Ablage (74) vorgesehen ist.

14. Mikrowellenofen mit dem Brottoaster nach einem der Ansprüche 1 bis 13, wobei die Belüftungsvorrichtung (100) umfasst:
einen Grill (110) mit mehreren Sauglöchern (110a,110b) an einer Vorderfläche des Mikrowellenofens, und
eine Gebläseanordnung (120), die zur Verbindung nach außen an einer Rückseite des Mikrowellenofens vorgesehen ist und ein Gebläse zum Einblasen von Luft in den Garraum (22) sowie einen Motor zum Antreiben des Gebläses aufweist.

## Revendications

1. Four à micro-ondes ayant un grille-pain, comportant :
une cavité pour micro-ondes (22),
une chambre pour dispositifs électriques (23) ayant divers dispositifs électriques pour chauffer un objet situé dans ladite cavité pour micro-ondes (22), ladite chambre pour dispositifs électriques (23) étant agencée dans une partie supérieure dudit four à micro-ondes,
un dispositif de ventilation (100) pour mettre à l'échappement l'air situé à l'intérieur de ladite cavité pour micro-ondes (22) vers l'extérieur dudit four à micro-ondes et refroidir lesdits dispositifs électriques, ledit dispositif de ventilation (100) étant agencé dans une partie supérieure dudit four à micro-ondes,
un grille-pain (30) adjacent à ladite cavité pour micro-ondes,
un carter de grille-pain (50) situé dans ledit grille-pain (30),
un avant de grille-pain (60) comprenant au moins une première ouverture (62),
une porte de grille-pain (40) pour exposer ou dissimuler sélectivement ladite au moins une première ouverture (62), et
au moins un plateau (74), ledit au moins un plateau (74) étant agencé à l'intérieur dudit carter de grille-pain (50) lorsque ladite au moins une première ouverture (62) est dissimulée, et, une partie dudit au moins un plateau (74) faisant saillie à partir dudit carter de grille-pain (50) à travers ladite au moins une première ouverture (62) lorsque ladite au moins une première ouverture (62) est exposée.

2. Four à micro-ondes ayant le grille-pain selon la revendication 1, comportant de plus un mécanisme de liaison, dans lequel ledit au moins un plateau (74) et ladite porte de grille-pain (40) sont reliés l'un à l'autre via ledit mécanisme de liaison.

3. Four à micro-ondes ayant le grille-pain selon la revendication 2, dans lequel ledit mécanisme de liaison comprend :
un support de plateau (70) pour supporter ledit au moins un plateau (74), et
un levier de liaison (76), dans lequel ledit support de plateau (70) et ladite porte de grille-pain (40) sont reliés l'un à l'autre via ledit levier de liaison (76).

4. Four à micro-ondes ayant le grille-pain selon la revendication 3, comportant de plus au moins une fente de déplacement (54) agencée dans ledit carter de grille-pain (50), ledit support de plateau (70) étant mobile le long de ladite au moins une fente de déplacement (54).

5. Four à micro-ondes ayant le grille-pain selon la revendication 4, dans lequel ladite au moins une fente de déplacement (54) est agencée dans une partie inférieure dudit carter de grille-pain (50).

6. Four à micro-ondes ayant le grille-pain selon la revendication 4 ou 5, dans lequel ladite au moins une fente de déplacement (54) est orientée parallèlement audit au moins un plateau (74).

7. Four à micro-ondes ayant le grille-pain selon la revendication 4, 5 ou 6, comprenant de plus une douille (72) reliée audit support de plateau (70), ladite douille (72) étant mobile dans ladite au moins une fente de déplacement (54).

8. Four à micro-ondes ayant le grille-pain selon la revendication 7, dans lequel ledit levier de liaison (76) comprend une première extrémité reliée de manière articulée à ladite douille (72), et une seconde extrémité reliée de manière articulée à ladite porte de grille-pain (40).

9. Four à micro-ondes ayant le grille-pain selon la revendication 8, comprenant de plus un élément élastique (79) relié audit levier de liaison (76), l'élément élastique (79) exerçant une force sur le levier de liaison (76) qui est indépendante de ladite porte de grille-pain (40).

10. Four à micro-ondes ayant le grille-pain selon la revendication 9, dans lequel ledit élément élastique (79) est relié à une première extrémité dudit levier de liaison (76).

11. Four à micro-ondes ayant le grille-pain selon l'une quelconque des revendications 1 à 10, dans lequel ladite porte de grille-pain (40) est reliée de manière rotative audit grille-pain (30).

12. Four à micro-ondes ayant le grille-pain selon la revendication 11, dans lequel un axe de rotation de ladite porte de grille-pain (40) est agencé au niveau d'une partie inférieure de ladite porte de grille-pain (40).

13. Four à micro-ondes ayant le grille-pain selon l'une quelconque des revendications 1 à 12, comportant de plus un rebord (75) agencé à l'arrière dudit au moins un plateau (74).

14. Four à micro-ondes ayant le grille-pain selon l'une quelconque des revendications 1 à 13, dans lequel ledit dispositif de ventilation (100) comprend :
une grille (110) ayant une pluralité de trous d'aspiration (110a, 110b) sur une surface avant dudit four à micro-ondes, et
un ensemble de ventilateur (120) prévu pour être relié avec l'extérieur au niveau d'un côté arrière dudit four à micro-ondes, et ayant un ventilateur pour ventiler l'air situé à l'intérieur de ladite cavité (22) et un moteur pour entraîner ledit ventilateur.
